# EUROPÄISCHE PATENTANMELDUNG

(11) **EP 4 123 286 A1**
(43) Veröffentlichungstag der Anmeldung: **25.01.2023**
(21) Anmeldenummer: 22184934.2
(22) Anmeldetag: 14.07.2022
(51) Int. Cl.: G01N 1/31

(54) **AUSGIESSFORM FÜR BIOPSIEN UND VERFAHREN ZUM HERSTELLEN EINES GEWEBEBLOCKS MITTELS EINER SOLCHEN AUSGIESSFORM**

(30) Priorität: 22.07.2021 DE 102021118984
(71) Anmelder: Märsch, Thomas, 80939 München (DE)
(72) Erfinder: Märsch, Thomas, 80939 München (DE)
(74) Vertreter: Keilitz Haines & Partner Patentanwälte PartGmbB

(57) **Zusammenfassung**

Die Erfindung betrifft eine Ausgießform (1) zum Herstellen eines Gewebeblocks (20), mit einem Boden (2) und Seitenwänden, die dazu vorgesehen ist, wenigstens eine Gewebeprobe (3) aufzunehmen und mit einem Ausgießmaterial, insbesondere Wachs (9), befüllt zu werden, um die wenigstens eine Gewebeprobe (3) darin einzubetten. Gemäß der Erfindung ist wenigstens ein Bereich (10) des Bodens (2) so rau ausgebildet ist, dass eine Gewebeprobe (3), die darauf gedrückt wird, am Boden (2) haften bleibt und im flüssigen Ausgießmaterial nicht aufschwimmt oder verrutscht, nachdem sie losgelassen wurde.

## Beschreibung

### Hintergrund der Erfindung

Die Erfindung betrifft eine Ausgießform für Biopsien für die Herstellung eines Gewebeblocks sowie ein Verfahren zum Herstellen eines eine oder mehrere Gewebeproben enthaltenden Gewebeblocks, insbesondere eines GewebeWachsblocks, mittels einer solchen Ausgießform.

Bei Verdacht auf bestimmte Gewebe- oder Zellerkrankungen wird dem Patienten üblicherweise eine Gewebeprobe (Biopsie) entnommen. Für die spätere mikroskopische Untersuchung wird die Gewebeprobe chemisch vorbehandelt (entwässert), dann in einen Wachsblock eingebettet und danach mittels eines Mikrotoms in dünne Scheiben geschnitten. Die einzelnen Scheiben der Gewebeprobe werden dann auf Objektträger (Glasplättchen) aufgezogen und können optional farblich markiert werden, um bestimmte Zelltypen sichtbar zu machen. Die Scheiben werden schließlich mit Hilfe eines Mikroskops auf mögliche Anomalien bzw. Erkrankungen untersucht. Ebenso kann aus dem Wachsblock auch Probenmaterial für weitere Untersuchungen, wie z. B. PCR, Sequenzierung, Maldi-TOF, etc. entnommen werden.

Die vorstehend genannte Biopsie wird in der Regel in einer Arztpraxis oder in einem Krankenhaus entnommen. Nach der Entnahme wird die Gewebeprobe in ein Probengefäß gegeben, in dem sich eine Fixierlösung befindet. Das Probengefäß wird dann in ein Labor zur weiteren Verarbeitung geschickt. Im Labor wird die Gewebeprobe aus dem Probengefäß entnommen, in eine Kassette eingelegt und dann in einen Entwässerungsautomaten gegeben. Der Entwässerungsautomat umfasst mehrere Bäder mit verschiedenen Chemikalien zur Entwässerung und Aufbereitung der Gewebeprobe. Danach wird die Gewebeprobe in eine Ausgießform gelegt und in der Regel mit heißem, flüssigen Wachs ausgegossen. Eine Kassette, die später den fertigen Gewebe-Wachsblock trägt, wird von oben in die Ausgießform eingesetzt. Der nach dem Abkühlen entstandene Gewebe-Wachsblock wird dann mittels der Kassette in ein Mikrotom eingespannt und in dünne Scheiben geschnitten, die danach mikroskopisch untersucht werden.

Bei der Herstellung von Gewebewachsblöcken im Pathologielabor werden üblicherweise Ausgießformen aus Metall oder Plastik verwendet, die sich dadurch auszeichnen, dass sie eine möglichst glatte Oberfläche haben. Die glatte Oberfläche erleichtert das Entformen des fertigen Wachsblocks aus der Ausgießform. Ein Nachteil der glatten Oberfläche besteht jedoch darin, dass man die Gewebeprobe beim Herstellen des Wachsblocks mit einem Werkzeug - meistens eine Pinzette oder ein Stempel - auf den Boden der Ausgießform drücken muss, um zu verhindern, dass die Biopsie im heißen, flüssigen Wachs herumschwimmt. Die Biopsie muss so lange heruntergedrückt werden, bis das Wachs beginnt, fest zu werden und die Biopsie fixiert. Diese Vorgehensweise ist erstens arbeitsintensiv und hat darüber hinaus den Nachteil, dass man schlecht mehrere Biopsien eines Patienten in einen Block einbetten kann, da man nicht mehrere Biopsien gleichzeitig positionieren und festdrücken kann.

Es wird also eine Lösung gesucht, mit der man eine oder mehrere Gewebeproben an gewünschten Positionen der Ausgießform fixieren kann, ohne dass sie im flüssigen Ausgießmaterial umherschwimmen. Weiterhin muss es möglich sein, den fertigen Gewebewachsblock unbeschadet aus der Ausgießform zu entnehmen, ohne dass die Biopsien am Boden der Ausgießform hängen bleiben oder aus dem Block rausbrechen.

Es gibt bereits verschiedene Konzepte, wie man Biopsien am Boden der Ausgießform fixieren kann. Hierfür gibt es u.a. Gewebekleber, Gele und schneidbare Plastik-Inlays. Der Nachteil dieser Verfahren liegt darin, dass immer Fremdmaterial in den Gewebewachsblock eingebracht wird, was später zu diagnostischen Problemen führen kann.

Es ist daher eine Aufgabe der vorliegenden Erfindung, eine Ausgießform und ein Verfahren zum Herstellen eines Gewebeblocks mittels einer solchen Ausgießform zu schaffen, bei der bzw. dem die Biopsie(n) im flüssigen Ausgießmaterial am Boden der Ausgießform liegen bleiben - ohne von Hand festgehalten werden zu müssen. Gelöst wird diese Aufgabe gemäß der Erfindung durch die in den unabhängigen Ansprüchen angegebenen Merkmale. Weitere Ausgestaltungen der Erfindung ergeben sich aus den Unteransprüchen.

### Zusammenfassung der Erfindung

Gemäß der Erfindung wird eine Ausgießform vorgeschlagen, die einen Boden und Seitenwände aufweist, und die dazu vorgesehen ist, wenigstens eine Gewebeprobe aufzunehmen und mit einem Ausgießmaterial, insbesondere Wachs, befüllt zu werden, um die wenigstens eine Gewebeprobe darin einzubetten. Die erfindungsgemäße Ausgießform zeichnet sich dadurch aus, dass wenigstens ein Bereich des Bodens so rau ausgebildet ist, dass eine Gewebeprobe, die darauf gedrückt wird, am Boden haften bleibt und im flüssigen Ausgießmaterial nicht aufschwimmt oder verrutscht, nachdem sie losgelassen wurde. Der bzw. die rauen Bereiche werden im Folgenden auch als "Haftbereich" bzw. "Haftbereiche" bezeichnet. Die Oberflächenstruktur des Haftbereiches ist vorzugsweise derart ausgebildet, dass die Biopsie und die Oberfläche wie bei einem Klettverschluss aneinanderhaften, jedoch durch leichten Zug auch wieder voneinander trennbar sind. Die Haftwirkung wird also durch eine Vielzahl mechanischer Bindungen mit der Oberfläche der Ausgießform erzeugt und nicht durch ein Fremdmaterial, wie z.B. chemische Kleber.

In einer Ausführungsform der Erfindung hat der Boden der Ausgießform einen oder mehrere raue Bereiche, an dem bzw. denen die Gewebeproben haften bleiben, sowie wenigstens einen glatten Bereich, an dem die Gewebeproben nicht haften bleiben. Würde man eine Gewebeprobe auf den glatten Bereich legen, würde sie also im flüssigen Ausgießmaterial aufschwimmen bzw. bei Bewegung (z.B. wenn die Ausgießform von der Heizplatte auf die Kühlplatte gestellt wird) in der Form verrutschen, auf dem Haftbereich dagegen nicht. Der bzw. die glatten Bereiche haben den Zweck, ein zu starkes Anhaften des Gewebeblocks an der Ausgießform zu vermeiden und ein einfaches Entformen des fertigen Gewebeblocks aus der Ausgießform zu ermöglichen. Die Seitenwände der Ausgießform haben vorzugsweise ebenfalls eine glatte Oberfläche.

Gemäß einer bevorzugten Ausführungsform der Erfindung ist die Ausgießform aus Metall, insbesondere aus einem Metallblech, hergestellt. Der wenigstens eine raue Bereich des Bodens wird vorzugsweise durch Nachbearbeiten des Metalls erzeugt. Die Ausgießform kann z. B. aus Edelstahl oder Aluminium hergestellt sein.

Der Haftbereich am Boden der Ausgießform kann prinzipiell durch jede geeignete, aus dem Stand der Technik bekannte Bearbeitungsmethode hergestellt werden. Die Nachbearbeitung einer Metalloberfläche kann z. B. eine oder mehrere der folgenden Bearbeitungsschritte umfassen: Lasern, Schleifen, Sandstrahlen oder Bestrahlen mit anderen Partikeln, Ätzen, Mikrobohren oder Auftragen einer rauen Oberfläche in einem additiven Herstellungsverfahren (3D-Druck). Ebenso könnte ein Pulver, z. B. ein Metallpulver oder ein anderes schmelzbares Material, auf den Boden der Ausgießform aufgebracht und das Pulver anschließend unter Hitzeeinwirkung, wie z. B. durch Laserbehandlung, aufgeschmolzen werden.

Gemäß einer ersten Ausführungsform der Erfindung wird die Metalloberfläche der Ausgießform mittels Laser nachbearbeitet. Der Laser kann dabei in sich überschneidenden Bahnen geführt werden, um tiefere Strukturen entstehen zu lassen. Der Laser kann senkrecht oder alternativ auch schräg zu Oberfläche ausgereichtet sein. Die Laserbearbeitung wird vorzugsweise so ausgeführt, dass in der Metalloberfläche der Ausgießform Hinterschneidungen entstehen, die eine erhöhte Haftwirkung mit der Biopsie ermöglichen.

In einer Ausführungsform der Erfindung umfasst der Boden der Ausgießform mehrere Haftbereiche, die in einem nicht-symmetrischen Muster angeordnet sind. Durch die nicht-symmetrische Anordnung der Haftbereiche kann ein Bearbeiter (z. B. eine MTA) unmittelbar eine bestimmte Reihenfolge der Biopsien bzw. die richtige Orientierung des Gewebeblocks erkennen.

Die Oberfläche des rauen Bereichs hat mikroskopisch betrachtet vorzugsweise eine Struktur mit Hinterschneidungen. Dadurch wird die Haftwirkung zwischen Oberfläche und Biopsie verbessert.

Die vorliegende Erfindung betrifft auch ein Verfahren zum Herstellen eines eine oder mehrere Gewebeproben enthaltenden Gewebeblocks, insbesondere eines Gewebewachsblocks, das folgende Schritte umfasst:
- Bereitstellen einer Ausgießform mit einem Boden, der einen oder mehrere raue Bereiche aufweist;
- Füllen der Ausgießform mit einem Ausgießmaterial, insbesondere flüssigem Wachs;
- Einlegen jeweils einer oder mehrerer Gewebeproben auf den bzw. die rauen Bereiche;
- Festdrücken der wenigstens einen Gewebeprobe, so dass die wenigstens eine Gewebeprobe an dem rauen Bereich haften bleibt;
- Loslassen der wenigstens einen Gewebeprobe im flüssigen Zustand des Ausgießmaterials, noch bevor das Ausgießmaterial anfängt hart zu werden;
- Aufsetzen eines Hilfsträgers auf die Ausgießform
- Aushärten des Ausgießmaterials; und
- Entformen des Gewebeblocks aus der Ausgießform.

Das vorstehend skizzierte Verfahren schafft einen Gewebeblock mit einer Oberfläche, die an den Bereichen, die an den Haftbereichen lagen, raue, matte Stellen aufweist.

Die Schritte 2,3,4 (Füllen, Einlegen, Festdrücken) des vorstehen beschriebenen Verfahrens können auch in anderer Reihenfolge durchgeführt werden. So kann die Biopsie beispielsweise auch zuerst in die Ausgießform eingelegt und die Ausgießform danach mit einem Ausgießmaterial befüllt werden. Die Erfindung kann auch allgemein dazu genutzt werden, eine oder mehrere Biopsien an einer bestimmten Stelle und mit einer bestimmten Orientierung im Gewebewachsblock zu positionieren.

Auf einer Seite des Gewebeblocks kann ein Hilfsträger angeordnet sein, der dazu ausgelegt ist, in ein Mikrotom eingespannt zu werden, mit dem der Gewebeblock in dünne Scheiben geschnitten wird. Bei dem Hilfsträger kann es sich beispielsweise um einen Teil einer aus dem Stand der Technik bekannten Standard-Biopsiekassette handeln. Die vorstehend genannten Haftbereiche befinden sich vorzugsweise auf einer dem Hilfsträger gegenüberliegenden Seite des Gewebeblocks. D.h., wenn sich der Hilfsträger z. B. an einer Oberseite befindet, befinden sich die rauen Bereiche an der Unterseite des Gewebeblocks.

### Kurze Beschreibung der Zeichnungen

Die Erfindung wird nachstehend anhand der beigefügten Zeichnungen beispielhaft näher erläutert. Es zeigen:
Fig. 1a-f ein Verfahren zur Verarbeitung von Gewebeproben (Biopsien) gemäß dem Stand der Technik;
Fig. 2a-f ein Verfahren zur Verarbeitung von Biopsien gemäß der Erfindung;
Fig. 3a-c verschiedene Varianten der erfindungsgemäßen Ausgießform; und
Fig. 4a, b verschiedene Varianten der erfindungsgemäßen Haftoberfläche
Fig. 5a, b verschiedene Varianten der Position der erfindungsgemäßen Haftoberfläche

### Ausführungsformen der Erfindung

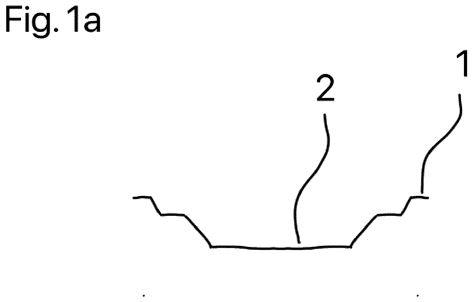

Fig. 1a zeigt einen Schnitt durch eine Ausgießform 1 für Biopsien gemäß dem Stand der Technik. Die Ausgießform 1 besteht hier aus einem gebogenen Stahlblech mit einem Boden 2 und Seitenwänden.

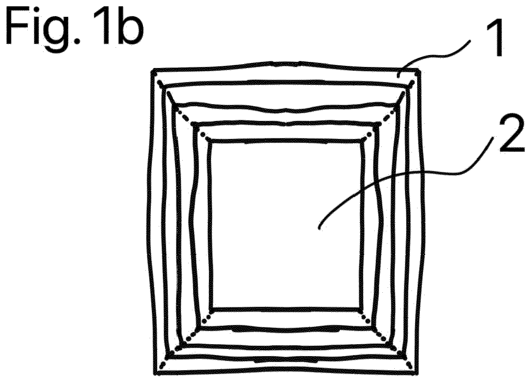

Fig. 1b zeigt die gleiche Form wie Fig 1a nun aus der Draufsicht. Der Boden 2 der Ausgießform hat eine rechteckige Form.

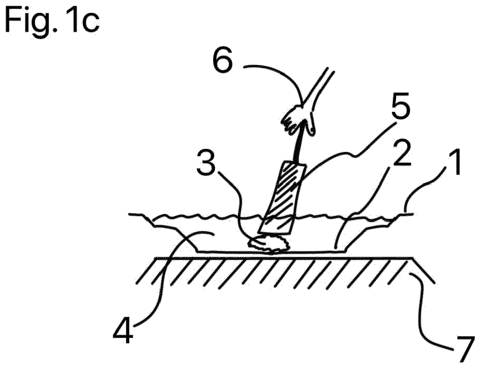

Fig. 1c zeigt die Ausgießform aus Fig. 1a nun in Benutzung. Die Ausgießform 1 ist gefüllt mit flüssigem, heißem Paraffin. Am Boden 2 der Ausgießform 1 liegt nun eine Biopsie 3. Die Gewebeprobe wird mit Hilfe eines geeigneten Werkzeugs 5 von einer Person 6 auf den Boden der Ausgießform gedrückt, damit sie nicht in dem flüssigen Wachs umherschwimmt. Die Ausgießform steht auf einer Kühlplatte 7, die das flüssige Paraffin von unten her abkühlt, so dass es fest wird und die Gewebeprobe 3 fixiert.

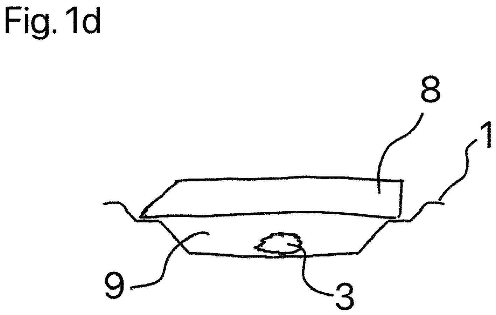

Fig. 1d zeigt, wie von oben eine Kassette 8 in die Ausgießform 1 eingesetzt wird. Die Biopsie 3 befindet sich im bereits erkalteten Paraffin 9.

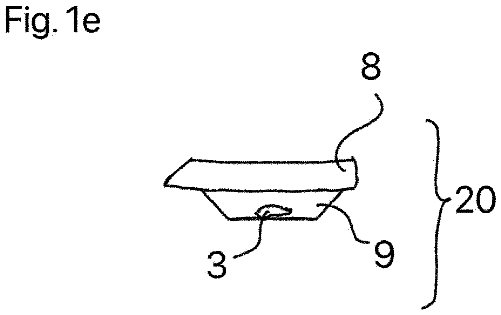

Fig. 1e zeigt den fertigen Gewebewachsblock 20 nach Entnahme aus der Ausgießform 1.

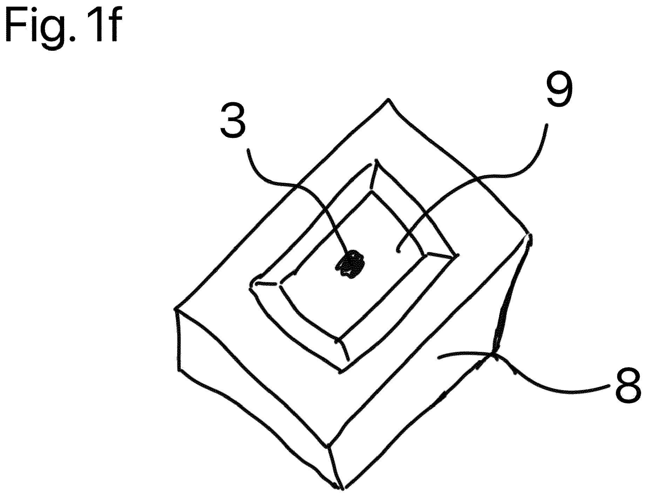

Fig. 1f zeigt den fertigen Gewebewachsblock perspektivisch von unten. Man sieht die Biopsie 3 im festen Wachs 9, der mit der Kassette 8 verbunden ist.

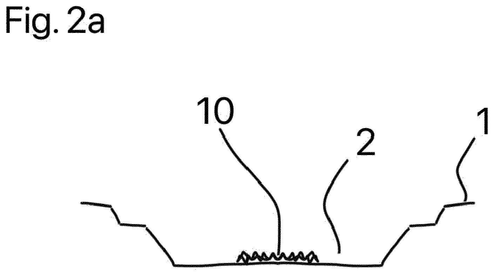

Fig. 2a zeigt eine erfindungsgemäße Ausgießform 1, die auf ihrem Boden 2 einen aufgerauten Bereich 10 hat.

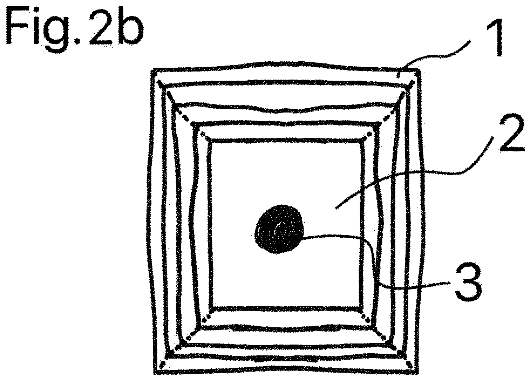

Fig. 2b zeigt die Form aus Fig. 2a nun aus der Draufsicht. Die aufgeraute Haftfläche 10 befindet sich hier in der Mitte des Bodens 2.

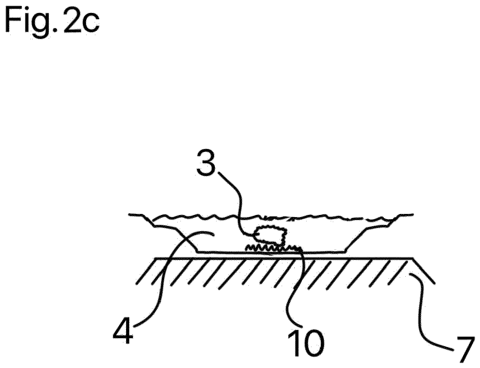

Fig. 2c zeigt die Form aus Fig. 2a nun in Benutzung. Die Form 1 ist gefüllt mit flüssigem, heißem Paraffin. Am Boden 2 der Form liegt eine Biopsie 3. Die Gewebeprobe 3 wird durch die Haftwirkung des Bereiches 10 auf dem Boden der Form festgehalten, ohne dass man sie mit einem Werkzeug für die Dauer bis zum Festwerden des Paraffins herunterdrücken muss. Die Form steht auf einer Kühlplatte 7. Dies führt dazu, dass das flüssige Paraffin von unten her abkühlt und fest wird.

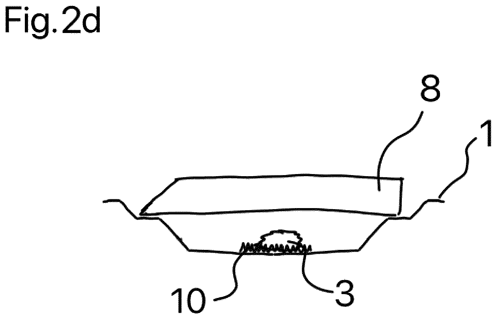

Fig. 2d zeigt, wie von oben eine Kassette 8 in die Ausgießform 1 eingesetzt wird. Die Biopsie 3 befindet sich im bereits erkalteten Paraffin 9. Man sieht den aufgerauten Bereich 10 am Boden der Form 1. Die Kassette 8 dient als Hilfsträger für den Gewebewachsblock 20. Bei der nachfolgenden Bearbeitung wird die Kassette 8 in ein Mikrotom eingespannt und der Gewebewachsblock 20 in dünne Scheiben geschnitten. Die Kassette 8 wird durch nochmaliges Aufgießen von Wachs (oder einem anderen Ausgießmaterial) mit dem Gewebewachsblock 20 verbunden.

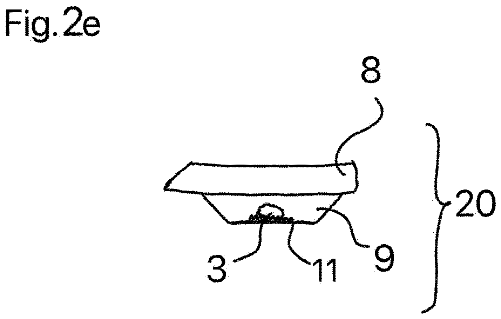

Fig. 2e zeigt den fertigen Gewebewachsblock 20 nach Entnahme aus der Ausgießform. Der Block 20 hat im Bereich unterhalb der Biopsie 3 einen Bereich 11 in dem das Paraffin leicht aufgeraut ist.

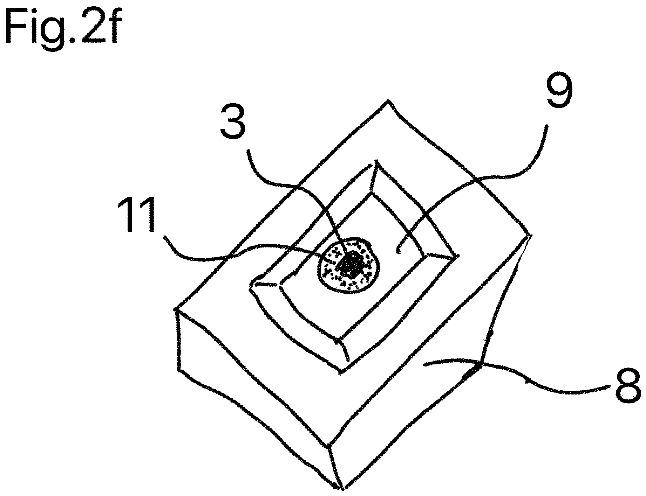

Fig. 2f zeigt den fertigen Gewebewachsblock perspektivisch von unten. Man sieht die Biopsie 3 im festen Wachs 9. In der Umgebung der Biopsie 3 sieht man einen matten Bereich 11, der als Abdruck der rauen Fläche entstanden ist.

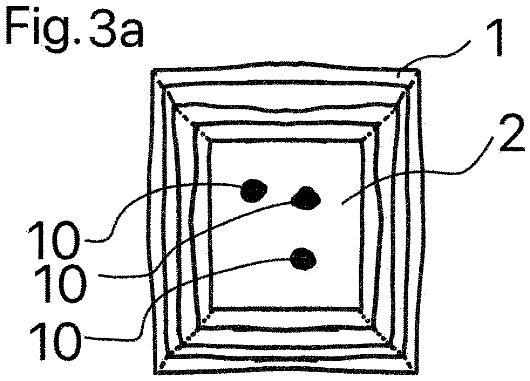

Fig. 3a zeigt eine erfindungsgemäße Ausgießform mit mehreren haftenden Bereichen 10 zum Einlegen mehrerer Gewebeproben in die Ausgießform 1 und Herstellen eines mehrere Gewebeproben enthaltenden Wachsblocks. Die haftenden Bereiche 10 sind in diesem Beispiel kreisförmig und in einem asymmetrischen Muster angeordnet. Andere Formen/Muster sind denkbar. Diese Variante eignet sich bevorzugt für mehrere Zangenbiopsien eines Patienten, z.B. entnommen aus dem Magen-Darm-Trakt.

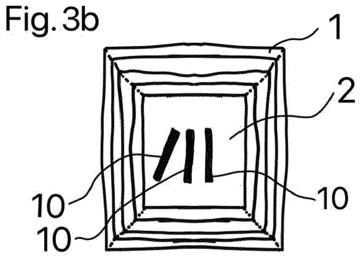

Fig. 3b zeigt ebenfalls eine erfindungsgemäße Ausgießform 1 mit mehreren haftenden Bereichen 10, die diesmal anders geformt und angeordnet sind als in Fig. 3a. Die haftenden Bereiche 10 sind in diesem Beispiel länglich und in einem asymmetrischen Muster angeordnet. Andere Formen/Muster sind denkbar. Diese Variante eignet sich bevorzugt für mehrere Nadelbiopsien eines Patienten, z.B. entnommen aus Brust, Niere oder Prostata.

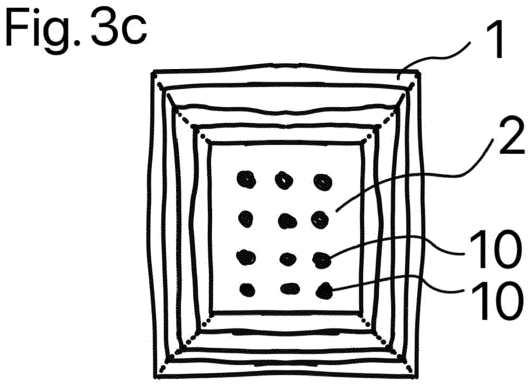

Fig. 3c zeigt ebenfalls eine erfindungsgemäße Ausgießform mit mehreren haftenden Bereichen 10, die diesmal anders angeordnet sind als in Fig. 3a. Die haftenden Bereiche 10 sind in diesem Beispiel in einem symmetrischen Muster angeordnet. Andere Formen/Muster sind denkbar. Diese Variante eignet sich bevorzugt zur Herstellung eines sogenannten TMA (Tissue Micro Array) Blocks.

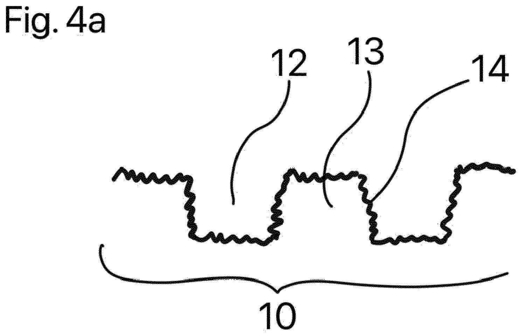

Fig. 4a zeigt eine vergrößerte Querschnittsansicht einer Variante der erfindungsgemäßen aufgerauten Oberfläche 10 mit Haftwirkung. Man sieht tiefere Bereiche 12 und höhere Bereiche 13 die sich abwechseln. An den Wänden der höheren Bereiche sieht man Zacken 14. Wenn man eine Gewebeprobe fest genug auf diese Oberfläche drückt, so dass das weiche Gewebe in die tieferen Bereiche hineingedrückt wird, entsteht eine Haftwirkung, da die Zacken 14 ein leichtes Ablösen der Gewebeprobe verhindern. Beim Entnehmen der Gewebeprobe aus der Ausgießform ist damit zu rechnen, dass die Zacken die unterste Schicht der Gewebeproben beschädigen. Dieser Bereich ist jedoch dünn und wird beim sogenannten "Trimmen" des Wachsblocks im Mikrotom sowieso weggeschnitten.

Man kann eine solche Oberfläche sowohl mit additiven als auch subtraktiven Verfahren herstellen. Als additives Verfahren ist der Metall 3D Druck zu nennen. Hierzu kann folgendes Vorgehen gewählt werden, andere Parameter sind möglich erzielen aber andere Eigenschaften. Die Form wird ganz normal gedruckt während die Haftbereiche eine "Textur" erhalten. Geeignet ist z.B. Metallpulver Kobalt-Chrom (Materialvorschlag: EOS CobaltChrome SPL) Dieses Material wird nun durch Laserstrahlen "geschmolzen". Hierfür wählt man einen YB-Faserlaser mit 200 Watt und einem Fokusdurchmesser von 40 µm. Die Bereiche, die man aufrauen will, fährt man nun in Einzelbahnen ab, die z.B. 80 - 150 µm voneinander entfernt sind. Da die Laserbahnen nebeneinander liegen, ohne sich zu überschneiden, ergeben sich Rippen und dazwischen liegende Rillen die "rau" sind. Einige der handelsüblichen Steuerungssoftwarepakete für 3D Drucker lassen ein solches Programm nicht zu, es kommen Warnungen wie "zu dünne Wandstärke" oder ähnliches. Man braucht also eine geeignete Software oder direkten Zugang zu den Steuerparametern der Lasersteuerung.

Man kann die genannten Rillen auch in eine handelsübliche Metallausgießform "hineindrucken", indem man die Form ca. 30 µm hoch mit Metallpulver füllt und dann mit dem Laser aufschmilzt.

Alternativ kann man die Oberfläche auch durch Materialabtrag z.B. mittels Laser erzeugen. Man nimmt hierfür wieder einen YB-Faserlaser mit hoher Leistung z.B. 400 Watt und fährt Bahnen durch die aufzurauenden Bereiche. Die Laserbahnen können sich überschneiden oder liegen nebeneinander.

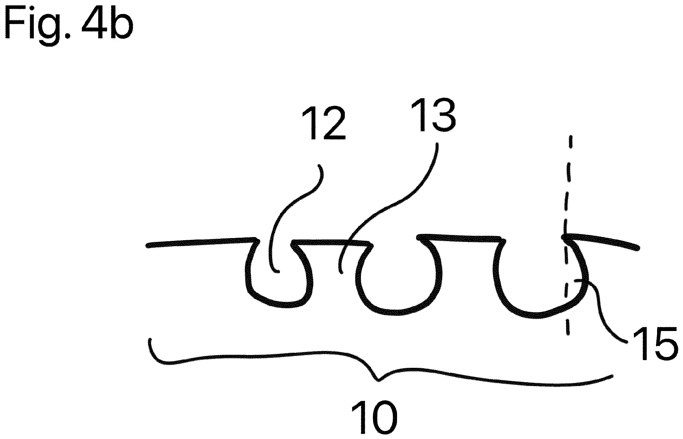

Fig. 4b zeigt eine vergrößerte Querschnittsansicht einer weiteren Variante der erfindungsgemäßen aufgerauten Oberfläche 10 mit Haftwirkung. Man sieht tiefere Bereiche 12 und höhere Bereiche 13 die sich abwechseln. Die Vertiefungen 12 sind ausgehöhlt eingebracht, so dass sich Hinterschneidungen 15 ergeben, die ebenfalls eine Haftwirkung entfalten. Man kann solche Oberflächen u.a. in einem chemischen Ätzprozess erzeugen. Hierzu geht man zweistufig vor. Zuerst bringt man die Löcher ein, z.B. durch einen Mikrobohrer oder einen Laserimpuls. Dann gießt man eine Flüssigkeit, die das Material auflösen kann, z.B. Salpetersäure auf die Oberfläche und wischt dann die Oberfläche trocken. Die Säure in den Löchern vergrößert diese nun und kann nach einer gewissen Zeit ausgewaschen werden. Diesen Prozess kann man noch verbessern indem man die Temperatur auf z.B. 95°C erhöht und so die Reaktivität der Säure steigert. Man kann den Prozess auch mehrmals wiederhohlen, je nachdem wie tief die Löcher sein sollen.

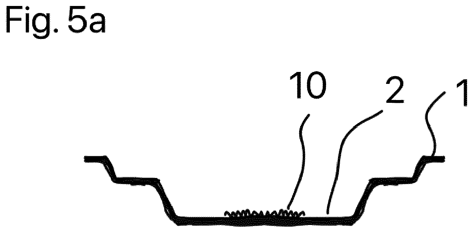

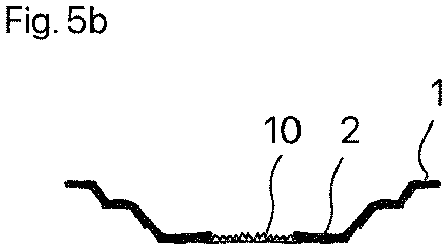

Fig. 5a und Fig. 5b zeigt die Ausgießform aus Fig. 2a nun jedoch in unterschiedlichen Varianten. Die Ausgießform besteht aus einem Metall, z. B. mit einer Dicke von 0,5 mm - 0,8 mm. In Variante von Fig. 5.a ist die aufgeraute Oberfläche auf das Metall aufgebracht. In Variante von Fig. 5b ist die aufgeraute Oberfläche in das Material hineingearbeitet.

## Patentansprüche

1. Ausgießform (1) zum Herstellen eines Gewebeblocks (20), mit einem Boden (2) und Seitenwänden, die dazu vorgesehen ist, wenigstens eine Gewebeprobe (3) aufzunehmen und mit einem Ausgießmaterial, insbesondere Wachs (9), befüllt zu werden, um die wenigstens eine Gewebeprobe (3) darin einzubetten,
**dadurch gekennzeichnet, dass**
der Boden (2) wenigstens einen rauen Bereich (10) aufweist, der so rau ausgebildet ist, dass eine Gewebeprobe (3), die darauf gedrückt wird, am Boden (2) haften bleibt und im flüssigen Ausgießmaterial nicht aufschwimmt oder verrutscht, nachdem sie losgelassen wurde.

2. Ausgießform (1) nach Anspruch 1, **dadurch gekennzeichnet, dass** der Boden (2) der Ausgießform (1) einen oder mehrere raue Bereiche (10), an dem bzw. denen die Gewebeprobe (3) haften bleibt, und wenigstens einen glatten Bereich aufweist, an dem die Gewebeprobe (3) nicht haften bleibt.

3. Ausgießform (1) nach Anspruch 1 oder 2, **dadurch gekennzeichnet, dass** die Ausgießform (1) aus Metall, insbesondere einem Metallblech, hergestellt ist, und der wenigstens eine raue Bereich (10) des Bodens (2) durch Nachbearbeiten des Metalls erzeugt wurde.

4. Ausgießform (1) nach Anspruch 3, **dadurch gekennzeichnet, dass** der wenigstens eine raue Bereich (10) durch eine oder mehrere der folgenden Bearbeitungsschritte erzeugt wurde: Lasern, Schleifen, Sandstrahlen oder Bestrahlen mit anderen Partikeln, Ätzen, Mikrobohren, durch Auftragen einer rauen Oberfläche in einem additiven Herstellungsverfahren (3D-Druck) oder durch Auftragen eines schmelzbaren Pulvers.

5. Ausgießform (1) nach Anspruch 1, **dadurch gekennzeichnet, dass** am Boden (2) mehrere raue Bereiche (10) vorgesehen sind, die in einem nicht-symmetrischen Muster angeordnet sind.

6. Ausgießform (1) nach Anspruch 1, **dadurch gekennzeichnet, dass** sie aus Edelstahl hergestellt ist.

7. Ausgießform (1) nach Anspruch 1, **dadurch gekennzeichnet, dass** die Oberfläche des rauen Bereichs (10) mikroskopisch betrachtet eine Struktur mit Hinterschneidungen aufweist.

8. Verfahren zum Herstellen eines eine oder mehrere Gewebeproben enthaltenden Gewebeblocks, insbesondere eines Gewebewachsblocks, das folgende Schritte umfasst:
- Bereitstellen einer Ausgießform (1) mit einem Boden (2), der einen oder mehrere raue Bereiche (10) aufweist;
- Füllen der Ausgießform mit einem Ausgießmaterial, insbesondere flüssigem Wachs (9);
- Einlegen jeweils einer oder mehrerer Gewebeproben (3) auf den bzw. die rauen Bereiche (10);
- Festdrücken der wenigstens einen Gewebeprobe (3), so dass die wenigstens eine Gewebeprobe (3) an dem rauen Bereich (10) haften bleibt;
- Loslassen der wenigstens einen Gewebeprobe (3) noch bevor das Ausgießmaterial hart geworden ist;
- Aufsetzen eines Hilfsträgers (8) auf die Ausgießform (1)
- Aushärten des Ausgießmaterials; und
- Entformen des Gewebeblocks aus der Ausgießform (1).
